# EUROPEAN PATENT SPECIFICATION

(11) **EP 1 996 838 B1**
(45) Date of publication and mention of the grant of the patent: **15.12.2010**
(21) Application number: 07758056.1
(22) Date of filing: 07.03.2007
(51) Int. Cl.: F16H 55/30

(54) **CHAIN NOISE REDUCTION DEVICE**
VORRICHTUNG ZUR DÄMPFUNG VON KETTENGERÄUSCHEN
DISPOSITIF RÉDUISANT LE BRUIT DE CHAÎNE

(30) Priority: 21.03.2006 US 784431 P
(43) Date of publication of application: 03.12.2008
(73) Proprietor: BorgWarner, Inc., Auburn Hills, MI 48326-2872 (US)
(72) Inventor: MARKLEY, George, L., Montour Falls, New York 14865 (US); MAXSON, Timothy, J., Ithaca, New York 14850 (US); CHEKANSKY, Jason, W., Auburn, New York 13021 (US)
(74) Representative: Petruzziello, Aldo
(86) International application number: PCT/US2007/063468
(87) International publication number: WO 2007/109420

(56) References cited:
- WO-A-2004/059194
- DE-A1- 10 327 461
- DE-U1-202004 004 293
- JP-A- 8 285 051
- US-A- 4 261 214

## Description

### BACKGROUND OF THE INVENTION

### FIELD OF THE INVENTION

The invention pertains to the field of chain noise reduction devices. More particularly, the invention pertains to cushion or damping rings in chain sprockets.

### DESCRIPTION OF RELATED ART

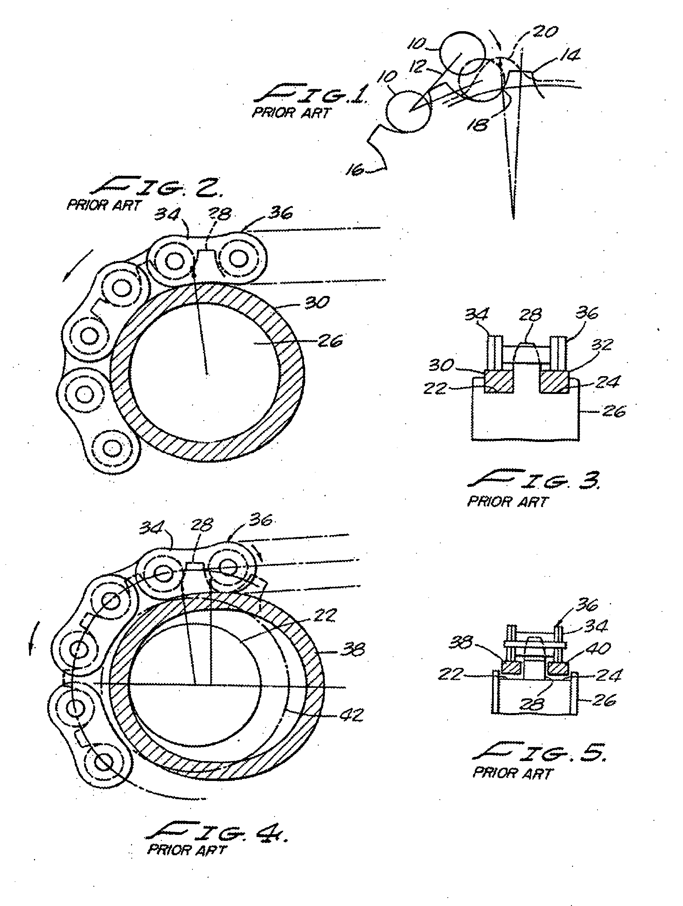

Chains and sprockets have long been used as a means for transmitting power, timing rotary components and the like. One difficulty associated with such chain and sprocket arrangements is the impact of the chain rollers or links on the sprocket as they engage. This impact creates excessive noise and excessive wear. This impacting and the noise associated therewith are shown in Figure 1 as resulting from the roller 10 of a chain 12, impacting against the tooth 14 of a sprocket 16. The loudest noise occurs at the engagement starting point 18, which occurs as indicated by the distribution curve 20 along the travel path of the chain.

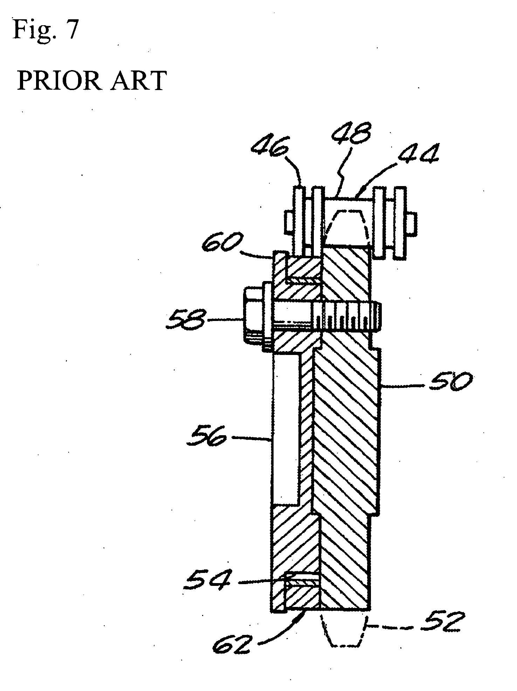

As a result of the noise and wear associated with conventional roller chain and sprocket couplings, devices have been developed in an effort to reduce these problems as discussed in Oonuma et al.'s US 4,348,199 and shown in prior art Figures 1-7. These devices have attempted to buffer the chain at the range of points 18 where the loudest noise occurs. A first buffer ring is illustrated in Figures 2 and 3 and includes circular peripheral grooves 22 and 24 on a sprocket 26 on either side of the sprocket tooth 28. Located within the grooves 22 and 24 are resiliently compressible buffer rings 30 and 32. These buffer rings 30 and 32 fit snugly in grooves 22 and 24 due to their resilient nature. The buffer rings in Figures 2 and 3 provide the buffering effect, reducing noise through the resilient restoring force against compression of the rings 30 and 32 in resisting the link plates 34 of chain 36. However, because of the fixed location of the buffer rings 30 and 32 relative to the sprocket 26 and the sprocket teeth 28, rapid wear and fatigue is experienced at fixed points on the rings 30 and 32, rendering the device as relatively impractical.

A second type of buffer ring is illustrated in Figures 4 and 5. The sprocket 26 again includes circular peripheral grooves 22 and 24 on either side of sprocket tooth 28 to accommodate metallic buffer rings 38 and 40. These buffer rings have an inner diameter which is larger than the outer diameter of either of the grooves 22 and 24. Also, the buffer rings 38 and 40 have a radial thickness which is less than or equal to the depth of the bottom of the grooves 22 and 24 below the inscribed circle 42 of the link plates 34 of the roller chain where it engages the sprocket. The inscribed circle 42 is shown in Figure 4.

The buffer ring shown in Figures 4 and 5 either functions by deforming the ring from its circular shape or remaining circular. The ring material itself is not compressed between the link plates of the chain 36 and the bottom of the grooves 22 and 24 as in the device of Figures 2 and 3. An advantage of the metallic buffer rings is that they constantly change position with respect to the teeth 28 of the sprocket 26 and hence do not have fixed wear spots. However, because there is still metallic on metallic contact between the rings 38 and 40 and the grooves 22 and 24, maximum noise abatement cannot be achieved.

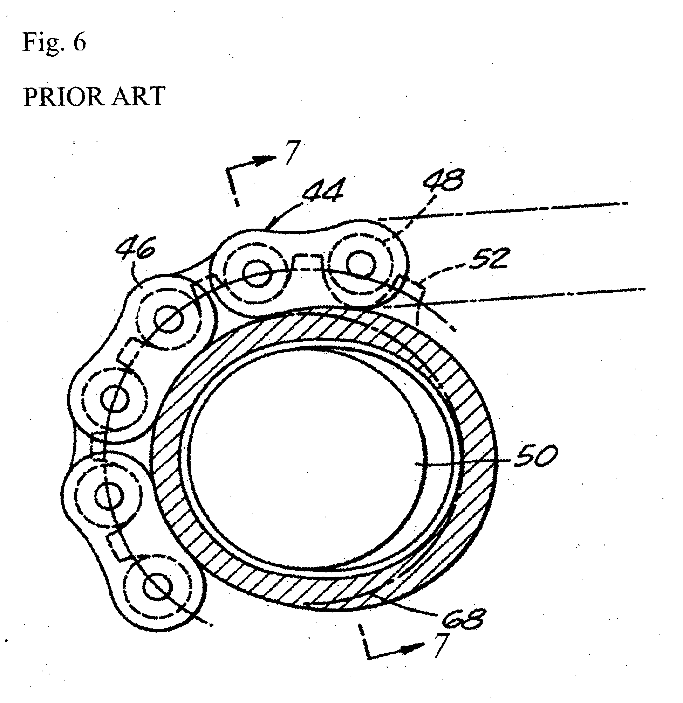

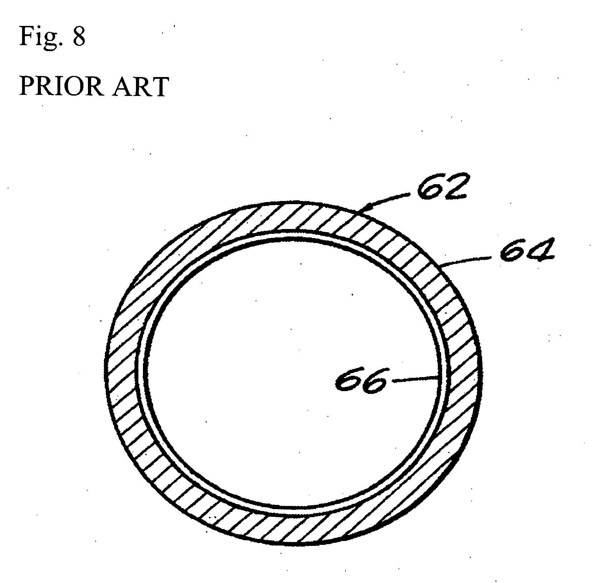

Figures 6, 7, and 8 show another type of buffer ring. The buffer ring 62 consists of an outer resiliently compressible ring 64 made out of rubber and an inner spring-like ring 66 that is not compressible, made of steel. The buffer ring 62 resides between the sprocket 50 and a circular flange member 56 in a circular peripheral groove 54. The circular flange member 56 is bolted to the sprocket 50 by fasteners 58. The circular flange member 56 also has a radial flange 60 that forms circular peripheral groove 54 with the side of the sprocket. The roller chain 44 is comprised of link plates 46 having rollers 48 that engage the teeth 52 of a sprocket 50.

One of the problems associated with the buffer ring 62 is that the sharp edges of the link plates of the chain 46 contact a very small surface of the rubber outer portion 64 of the buffer ring 62. Since the surface area in which the edges of the links 46 contact the outer portion 64 of the buffer ring 62 is small, the sharp edges of the links 46 are forced to continuously contact the rubber outer portion 64 of the ring at the same place, indenting and wearing the rubber, resulting in a chewing of the outer portion 64 of the buffer ring 62 at the contact places between the sharp links of the chain and the rubber outer ring 64.

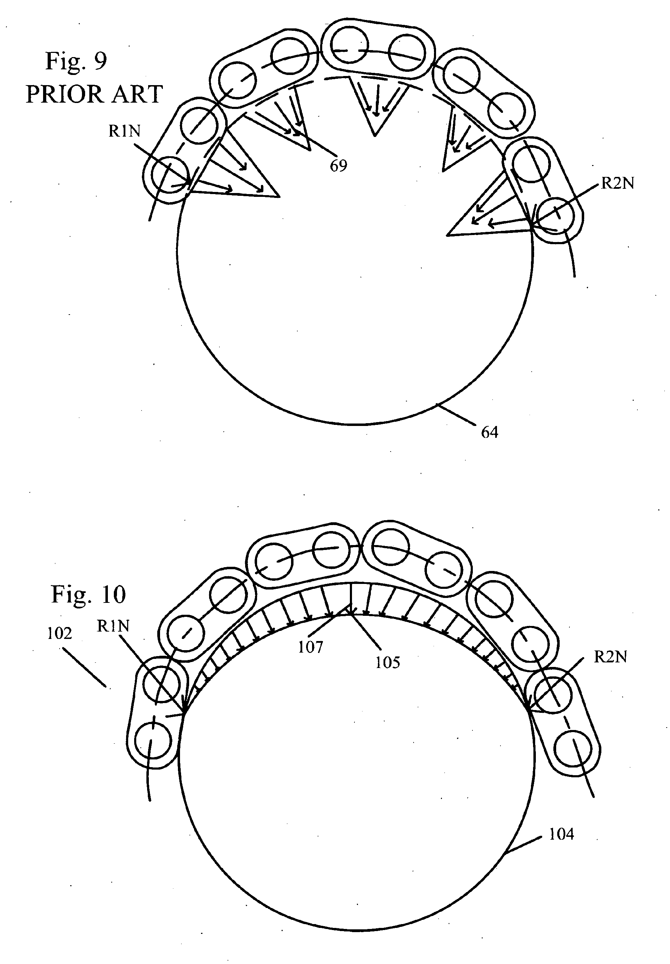

The indentations to the rubber and the high localized stress that occurs at these points is shown in Figure 9 by arrows 69.

Another example of a cushion ring is shown in Watanabe et al.'s US Patent No. 4,261,214, which discloses a ring formed with a multilayer structure of an inner spirally winding body with the layers of the body being close together and an outer periphery with a cushioning material. The body may be made of spring steel or a strengthened plastic. The cushioning material contacts the roller chain guides.

Another cushion ring made of steel is shown in Hamilton's US Published Application 2003/0176251, which discloses a sprocket assembly with two cushion rings trapped by respective non-circular flanges. The cushion rings are steel. The cushion rings are installed on the sprocket body by deforming the cushion rings and then inserting the non-circular flange of the sprocket body through the opening of the cushion ring.

Kawashimi et al.'s US Patent No. 4,227,422 discloses a buffer spring plate or cushion ring with an inner member that is a steel spring plate and an outer member that has flexibility and elastibility like rubber or plastic. The outer member contacts the roller chain guides.

DE-U 20 2004 004293 teaches a sprocket wheel according to the preamble of claim 1, with a cushion ring comprising an outer ring made of glass fibre reinforced polyamide, a cushioning ring element made of an elastic material with good damping characteristics and an inner ring made of steel or plastic.

The cushioning ring element, placed between the outer and the inner rigid rings, is fastened to the inner rigid ring of the cushion ring, which in turn is pressed onto the flange of the sprocket, so that no space between the cushion ring and the sprocket is provided.

Therefore there is a need in the art for a cushion ring that has a long life, resists wear and decreases the noise from the impact of the chain with the sprocket.

### SUMMARY OF THE INVENTION

A cushion ring is received in a concentric groove in a sprocket with teeth and a hub. More specifically, the groove is defined between an annular portion of the hub and the teeth, for contacting link chain strands of a chain. The cushion ring has an inner ring and an outer ring. The outer ring is made of an incompressible material that has a load bearing area for receiving the load from links of the chain. The load and engagement noise energy of the chain links is combined and distributed over a large area of the outer ring. The inner ring receives this distributed load and noise energy from the outer ring and absorbs most of the energy. This improved distribution decreases wear and increases life the teeth, for contacting link chain strands of a chain. The cushion ring has an inner ring and an outer ring. The outer ring is made of an incompressible material that has a load bearing area for receiving the load from links of the chain. The load and engagement noise energy of the chain links is combined and distributed over a large area of the outer ring. The inner ring receives this distributed load and noise energy from the outer ring and absorbs most of the energy. This improved distribution decreases wear and increases life of the resilient material while also providing for a reduced level of chain engagement noise.

The inner ring floats relative to the groove between the annular portion of the hub and the teeth and the outer ring.

The outer ring is preferably made of steel or spring steel and the inner ring is preferably made of plastic or rubber, although other materials may also be used.

The cushion ring may be used with a roller chain, a silent chain, a toothed chain, and/or a power transmission chain with pins and links.

### BRIEF DESCRIPTION OF THE DRAWING

Fig. 1 shows a schematic of the coupling between a roller chain and a sprocket.
Fig. 2 shows a side view of a first prior art buffer ring interacting with a roller chain.
Fig. 3 shows a cross-section of Figure 2.
Fig. 4 shows a side view of a second prior art buffer ring interacting with a roller chain.
Fig. 5 shows a cross-section of Figure 4.
Fig. 6 shows a side view of another prior art buffer ring interacting with a roller chain and sprocket.
Fig. 7 shows a cross-sectional view taken along line 7-7 of Figure 6.
Fig. 8 shows a schematic of a prior art buffer ring of Figure 6.
Fig. 9 shows a schematic of the force impacts on the prior art buffer ring of Figure 6.
Fig. 10 shows a schematic of the force impacts on a cushion ring of a first embodiment not being part of the present invention.
Fig. 11 shows a side view of the cushion ring of the first embodiment with a sprocket.
Fig. 12 shows a schematic of the cushion ring of the first embodiment mounted on a sprocket and engaging a roller chain.
Fig. 13 shows a section view of the cushion ring of the first embodiment with a sprocket.
Fig. 14 shows a schematic of a cushion ring of a sprocket according to the invention.
Fig. 15 shows a section view of the cushion ring of the second embodiment with a sprocket.

### DETAILED DESCRIPTION OF THE INVENTION

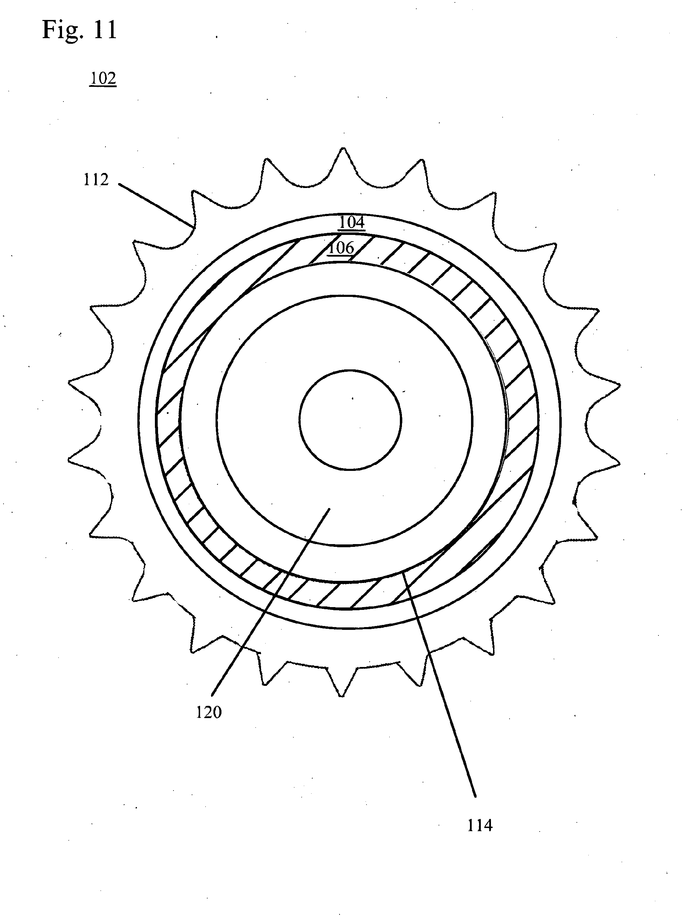

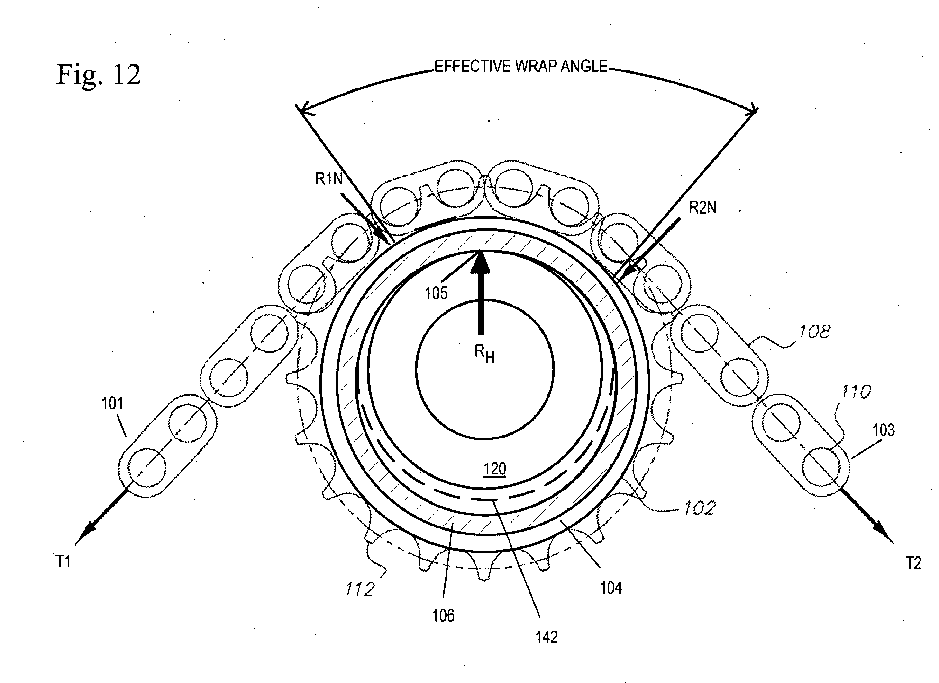

Figure 12 shows a schematic of the cushion or buffer ring 102, not being part of the present invention mounted to a sprocket 112 and engaging a roller chain of chain links 108 and rollers 110. The cushion ring 102 includes an outer ring 104 made of a spring-like steel or a material that is not compressible and an inner ring 106 of a compressible or resilient material such as rubber or plastic. In this embodiment, the outer ring 104 and the inner ring 106 are bonded together as shown in Figure 11. The cushion ring 102 has a larger outside diameter than the inscribed circle 142 created by the chain link plates 108 when engaged with the sprocket 112. The cushion ring 102 acts as a force balance between the entrance and exit chain strands 101, 103 on a single sprocket. The cushion ring 102 interferes with the chain path at the engagement point by an amount approximately equal to the chordal amplitude of the sprocket. If the tension of the entrance and exit strands of the chain 101, 103 are equal, the cushion ring 102 cancels the chordal action of the chain. If the tension in the entrance and exit strands 101, 103 is not equal, the cushion ring 102 momentarily transfers load from the tight strand 103 to the loose or slack strand 101 of the chain.

The cushion ring 102 receives load at three points. The first load R_{H} at point 105 is on the inner diameter of the inner ring 106 of the cushion ring which runs on the sprocket hub 120. The second and third loads R_{1N}, R_{2N} are produced at the entrance and exit positions where the chain contacts the outer diameter of the outer ring 104 of the cushion ring 102. The cushion ring 102 contacts the chain over a short distance near the engagement points. The cushion ring 102 may or may not contact the chain over the effective wrap angle depending on the compressibility of the resilient material. As the tensions T1 and T2 of the entrance and exit strands 101, 103 of the chain vary, the cushion ring 102 rocks at a pivot point 105, to transfer the strand tension from the tight strand 103 to the loose strand 101, momentarily decreasing the tension and the ring interference or contact of the tight strand 103, while the ring interference with the loose side 101 of the chain and tension increases. The forces R_{1N} and R_{2N} are relatively small for large strand tensions because the interference is small compared to the chain strand length.

By having the outer ring 104 of the cushion ring 102 be spring-like steel, the cushion ring of the present invention reduces the impact energy of the chain's links 108 seating on the sprocket 112. The inner ring 106, made of a resilient material such as rubber or plastic, softens the impact of the links 108 even further and adds additional cushion and sound deadening between the cushion ring 102 and the sprocket 112, where damage to and/or wear of the resilient inner ring 106 is less likely. Damage to and/or wear of the cushion ring 102 is also less likely because of the significant increase in the load bearing portion in which the links 108 of the chain contact, the smoothness of the outer ring surface 104a that mates with the links 108, and the elimination of contact between the resilient inner ring 106 and the cutting edges of the roller chain guide links 108.

As previously stated, the cushion ring 102 has an outer ring 104 of an incompressible material, preferably steel, and an inner ring 106 of a compressible material, preferably rubber or plastic. With the outer ring 104 and contact surface of the chain being incompressible (steel), the load generated by the chain over the effective wrap angle is distributed along the outer surface 104 of the cushion ring 102, meaning not in pockets of point loads as in the prior art, increasing the life of the cushion ring 102. The load transmitted to the inner ring 106 at the entrance and exit points of the chain strands is very small and the load increases as the top dead center and point 105 is approached. The highest load on the inner ring 106 is at the top dead center at R_{H} and point 105 and the least amount of load present at the entrance and exit points R_{1N}, R_{2N} of the chain strands 101, 103 as shown in Figures 10 and 12. Furthermore, with the inner ring 106 made of compressible material (rubber), any load spikes on the steel outer ring 104 is further absorbed and damped by the inner ring 106.

In the prior art, specifically US 4,348,199 and shown in prior art Figures 6 through 8, where the cushion ring has an outer ring of rubber or compressible material and an inner ring of an incompressible material of steel, the wear and the stress on the outer ring is significantly high. In the prior art, the edges of the links 46 of the chain contact a small surface of the outer portion 64 of the buffer ring 62. With the contact area being so small, and easily displaceable due to characteristics of the material used, the sharp edges of the links 46 of the chain continuously contact the outer ring 64 not necessarily at the same places, indenting and displacing the rubber when contact with the chain is made, eventually resulting in a chewing up of the rubber. Referring to Figure 9, the rubber outer ring 64 of the cushion ring 62 receives point load stress, shown by arrows 69 along the effective wrap angle. The point load stress would be heaviest at the entrance and exit contact points with the chain and decrease as approach, but are still present near top dead center. With the point stress as shown in Figure 9 and the increased wear of the rubber, the prior art cushion rings are not as effective at balancing the forces of the entrance and exit strands of the chain and have a very short wear life.

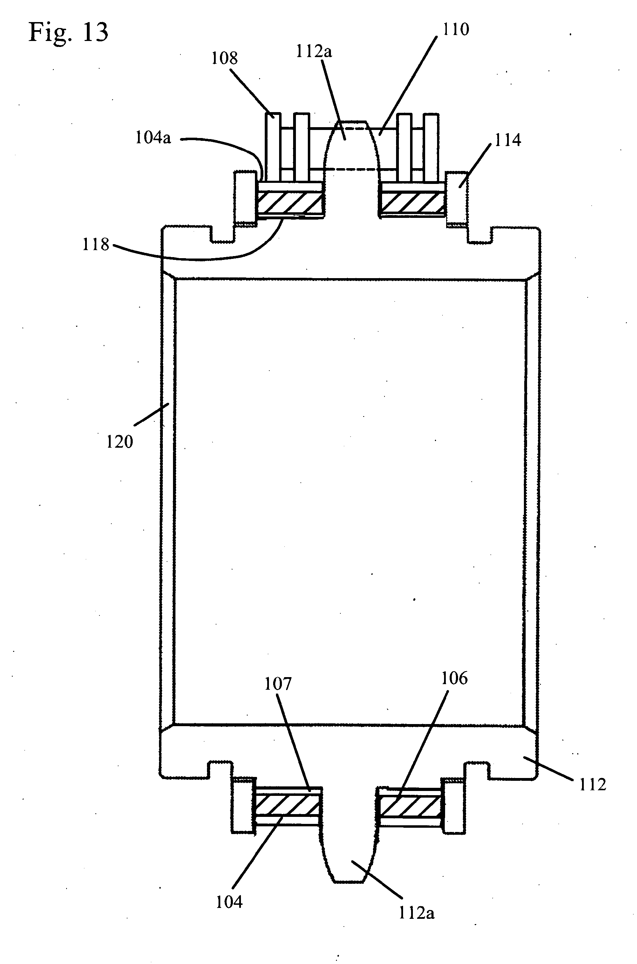

Figures 11 and 13 show another schematic of a cushion ring of the first embodiment with a sprocket. The sprocket comprises a hub 120, an annular portion with radial flanges 114 and a continuous circumferential row of spaced apart radially projecting teeth 112. The annular portion is fastened or welded onto the hub 120 and the radial flanges 114 define circular outer diameters or concentric grooves 118 that are larger than the cushion ring inner diameter, trapping the cushion ring 102 loosely within the concentric groove 118. The grooves 118 are positioned coaxially with the sprocket 112 and are adjacent to the sprocket teeth 112a. A small space 107 (see Figure 10) is present between the groove 118 and the resilient inner ring 106 of the cushion ring 102 to allow the resilient component of the inner ring 106 to displace as necessary. The links 108 of chain run along the outer surface or load bearing portion 104a of the outer ring 104.

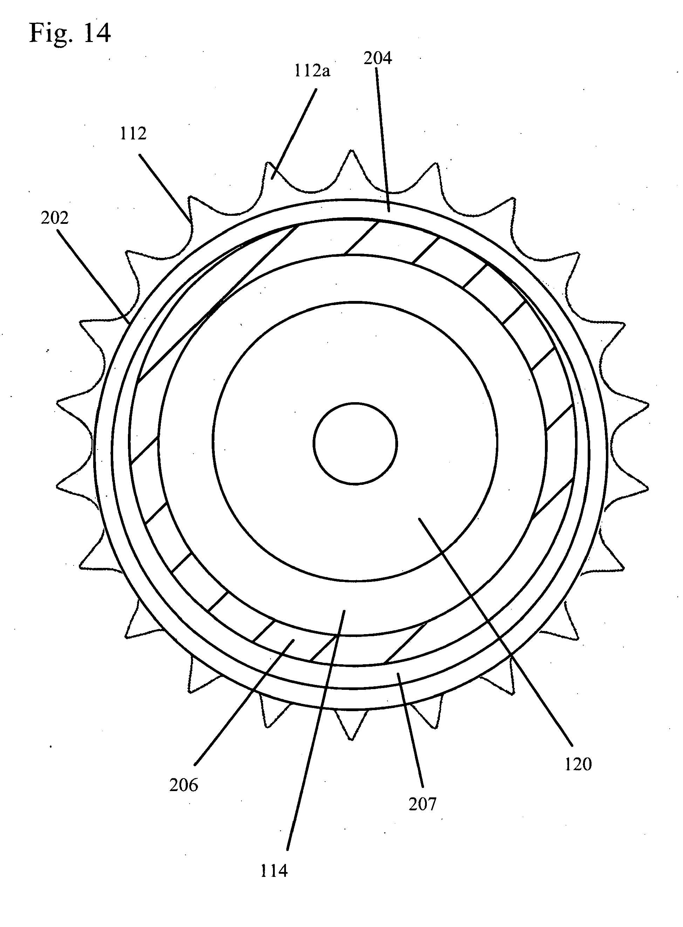

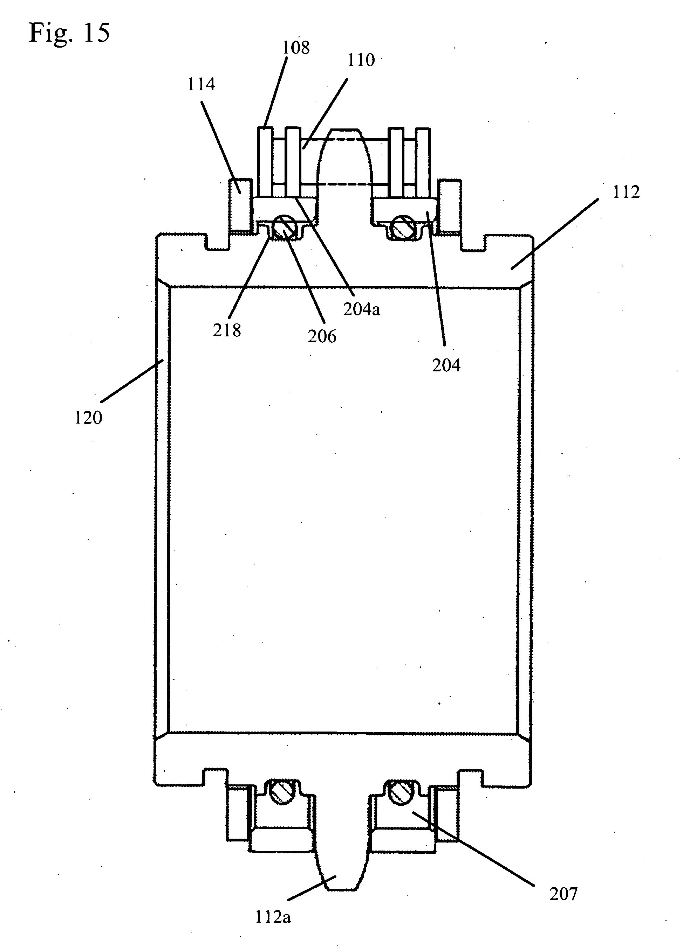

Figures 14 and 15 show a cushion ring of a second embodiment with a sprocket according to the invention. The cushion ring 202 is comprised of an outer ring 204 made of spring-like steel that is not compressible and an inner ring 206 made of a resilient material such as rubber or plastic.
In this embodiment, the outer ring 204 and the inner ring 206 are not bonded together and are independent of each other or separate. The inner ring 206 has a smaller diameter than the outer ring 204 and a space 207 is present between the inner ring 206 and the outer ring 204. The inner ring 206 is preferably an O-ring. The sprocket comprises a hub 120, an annular portion with radial flanges 114 and a continuous circumferential row of spaced apart radially projecting teeth 112a. The annular portion is fastened or welded onto the hub 120 and the radial flanges 114 define circular outer diameters or concentric grooves 218 that are larger than the cushion ring inner diameter, trapping the cushion ring 202 loosely within the concentric groove 218. The grooves are positioned coaxially with the sprocket 112 and are adjacent to the sprocket teeth 112a.

With the inner ring 206 separate from the outer ring 204 and having a smaller diameter than the outer ring 204, and the inner ring 206 floats within the concentric groove 218 independent of the outer ring 204. The outer ring 204 rotates or floats independent of the inner ring around the outer diameter of the inner ring 206. With the inner ring 206 and the outer ring 204 floating or rotating independent of each other, the outer diameter of the inner ring 206 will contact the same place on the inner diameter of the outer ring 204 with an extremely low frequency, distributing the wear of the cushion ring evenly or continuously.

The links 108 of chain run along the outer surface or load bearing portion 204a of the outer ring 204. With the outer ring 204 and contact surface of the chain being incompressible (steel), the load generated on the chain over the effective wrap angle is distributed along the outer surface 204 of the cushion ring 202, meaning not in pockets of point loads as in the prior art, increasing the life of the cushion ring 202. The load transmitted to the inner ring 106 at the entrance and exit points of the chain stands is very small and the load increases as the top dead center and point 105 is approached. The highest load on the inner ring 106 is at the top dead center at R_{H} and point 105 and the least amount of load present at the entrance and exit points R_{1N}, R_{2N} of the chain strands 101, 103 similar to the first embodiment shown in Figures 10 and 12. Furthermore, with the inner ring 206 made of compressible material (rubber), any load spikes on the steel outer ring 204 is further absorbed and damped by the inner ring 206.

As in the first embodiment, damage and wear is decreased due to the significant increase in the load bearing portion in which the links of the chain contact, the smoothness of the outer ring 204 surfaces that mate with the chain's links 108 and the resilient inner ring 206, the elimination of contact between the resilient inner ring 206 and the cutting edges of the chain links 108, and the cycling of the load bearing area of the inner ring 206. The force distribution of cushion ring 202 is improved similarly to cushion ring 102 of Figure 10 and 11.

In either embodiment, the cushion rings 102, 202 are not limited to one side or the other of the sprocket teeth 112, but may be applied to each side of the sprocket hub 120.

The inner ring 106, 206 is preferably HNBR rubber. The outer ring 104, 204 is preferably high carbon or alloy steel with a hardness similar to the links 108 of the chain.

The cushion ring 102, 202 of the present invention may also be used with toothed chains, silent chains, and other power transmission chains with pins and links.

Accordingly, it is to be understood that the invention herein described is merely illustrative of the application of the principles of the invention. Reference herein to details of the illustrated embodiments is not intended to limit the scope of the claims, which themselves recite those features regarded as essential to the invention.

## Claims

1. **A sprocket wheel comprising:** a hub **(120),** teeth **(112a)** and **a concentric** groove **(218)** defined between an annular portion of the hub **(120)** and **the** teeth **(112a), and** a cushion ring **(202)** received in said concentric groove **(218) of the** sprocket **(112)** for contacting link chain strands **(101,103)** of a chain, **the cushion ring (202)** comprising:
an outer ring **(204)** of an incompressible material having a load bearing area receiving load from a link **(108)** of the chain;
an inner ring **(206)** of a resilient material within the outer ring **(204)** having a diameter smaller than the outer ring **(204);**
**characterized in that:**
**the inner ring (206) floats relative to the groove (218) and the outer ring (204),**
such that the load is distributed across the outer ring **(204)** of the cushion ring **(202)** and absorbed by the inner ring **(206)** of the cushion ring **(202),** decreasing wear of the inner ring **(206)** and the outer ring **(204)** of the cushion ring **(202).**

2. The **sprocket** of claim 1, wherein the inner ring (206) is independent of the outer ring (204).

3. The **sprocket** of claim 1, wherein the incompressible material of the outer ring (204) is steel.

4. The **sprocket** of claim 1, wherein the incompressible material of the outer ring (204) is spring steel.

5. The **sprocket** of claim 1, wherein the resilient material of the inner ring (206) is rubber.

6. The **sprocket** of claim 1, wherein the resilient material of the inner ring (206) is plastic.

7. The **sprocket** of claim 1, wherein the chain is a roller chain.

8. The **sprocket** of claim 1, wherein the chain is a silent chain.

9. The **sprocket** of claim 1, wherein the chain is a toothed chain.

## Patentansprüche

1. Kettenrad, umfassend: eine Nabe (120), Zähne (112a) und eine konzentrische Nut (218), die zwischen einem ringförmigen Teil der Nabe (120) und den Zähnen (112a) definiert ist, und einen Dämpfungsring (202), der in der konzentrischen Nut (218) des Kettenrads (112) zur Berührung von Gliederkettensträngen (101, 103) einer Kette aufgenommen ist, wobei der Dämpfungsring (202) Folgendes umfasst:
einen Außenring (204) aus einem nicht komprimierbaren Material mit einem Lasttragbereich, der Last von einem Glied (108) der Kette aufnimmt;
einen Innenring (206) aus einem elastischen Material innerhalb des Außenrings (204) mit einem kleineren Durchmesser als der Außenring (204);
**dadurch gekennzeichnet, dass**
der Innenring (206) bezüglich der Nut (218) und des Außenrings (204) schwimmt, so dass die Last über den Außenring (204) des Dämpfungsrings (202) verteilt und von dem Innenring (206) des Dämpfungsrings (202) aufgenommen wird, wodurch Verschleiß des Innenrings (206) und des Außenrings (204) des Dämpfungsrings (202) verringert wird.

2. Kettenrad nach Anspruch 1, wobei der Innenring (206) von dem Außenring (204) unabhängig ist.

3. Kettenrad nach Anspruch 1, wobei das nicht komprimierbare Material des Außenrings (204) Stahl ist.

4. Kettenrad nach Anspruch 1, wobei das nicht komprimierbare Material des Außenrings (204) Federstahl ist.

5. Kettenrad nach Anspruch 1, wobei das elastische Material des Innenrings (206) Kautschuk ist.

6. Kettenrad nach Anspruch 1, wobei das elastische Material des Innenrings (206) Kunststoff ist.

7. Kettenrad nach Anspruch 1, wobei die Kette eine Rollenkette ist.

8. Kettenrad nach Anspruch 1, wobei die Kette eine geräuscharme Kette ist.

9. Kettenrad nach Anspruch 1, wobei die Kette eine Zahnkette ist.

## Revendications

1. Roue dentée comprenant : un moyeu (120), des dents (112a) et une gorge concentrique (218) définie entre une portion annulaire du moyeu (120) et les dents (112a), et une bague d'amortissement (202) reçue dans ladite gorge concentrique (218) de la roue dentée (112) pour venir en contact avec des tronçons de chaîne articulée (101, 103) d'une chaîne, la bague d'amortissement (202) comprenant:
une bague extérieure (204) en matériau incompressible ayant une surface portante recevant une charge d'un maillon (108) de la chaîne ;
une bague intérieure (206) en matériau élastique dans la bague extérieure (204), ayant un diamètre plus petit que celui de la bague extérieure (204) ;
**caractérisée en ce que**
la bague intérieure (206) flotte par rapport à la gorge (218) et la bague extérieure (204),
de telle sorte que la charge soit répartie en travers de la bague extérieure (204) de la bague d'amortissement (202) et absorbée par la bague intérieure (206) de la bague d'amortissement (202), réduisant l'usure de la bague intérieure (206) et de la bague extérieure (204) de la bague d'amortissement (202).

2. Roue dentée selon la revendication 1, dans laquelle la bague intérieure (206) est indépendante de la bague extérieure (204).

3. Roue dentée selon la revendication 1, dans laquelle le matériau incompressible de la bague extérieure (204) est de l'acier.

4. Roue dentée selon la revendication 1, dans laquelle le matériau incompressible de la bague extérieure (204) est de l'acier à ressort.

5. Roue dentée selon la revendication 1, dans laquelle le matériau élastique de la bague intérieure (206) est du caoutchouc.

6. Roue dentée selon la revendication 1, dans laquelle le matériau élastique de la bague intérieure (206) est du plastique.

7. Roue dentée selon la revendication 1, dans laquelle la chaîne est une chaîne à rouleaux.

8. Roue dentée selon la revendication 1, dans laquelle la chaîne est une chaîne silencieuse.

9. Roue dentée selon la revendication 1, dans laquelle la chaîne est une chaîne dentée.
